# FASCICULE DE BREVET EUROPEEN

(11) **EP 2 202 677 B1**
(45) Date de publication et mention de la délivrance du brevet: **29.04.2015**
(21) Numéro de dépôt: 09172027.6
(22) Date de dépôt: 02.10.2009
(51) Int. Cl.: G06K 19/077, H04B 5/02

(54) **Carte à microcircuit et terminal mobile comprenant une telle carte**
Chipkarte und mobiles Endgerät, das eine solche Karte umfasst
Chip card and mobile terminal comprising such a card

(30) Priorité: 23.12.2008 FR 0858994
(43) Date de publication de la demande: 30.06.2010
(73) Titulaire: Oberthur Technologies, 92300 Levallois-Perret (FR)
(72) Inventeur: Capitaine, Christophe, 35220, CHATEAUBOURG (FR); Le Garrec, Loïc, 35220, CHATEAUBOURG (FR)
(74) Mandataire: Delumeau, François Guy

(56) Documents cités:
- WO-A-99/26197
- DE-A1- 19 521 111
- US-A- 5 773 812

## Description

La présente invention concerne le domaine technique des cartes à microcircuit et plus précisément mais non spécifiquement le domaine technique des cartes d'identification à un réseau de téléphonie mobile.

Une carte d'identification est connue également sous le nom de carte SIM (acronyme anglais pour « *Subscriber Identity Card Module* ») ou carte USIM (pour « *Universal Subscriber Identity Module* » encore appelée carte UICC pour « *UMTS Integrated Circuit Card* ») ou plus généralement carte RUIM (pour "*Removable Universal Identity Module*").

Ces cartes comprennent généralement des moyens de traitement de données et des moyens de mémorisation de données pour le stockage des informations spécifiques à un utilisateur du réseau de téléphonie mobile.

La présence de cette carte au sein d'un terminal mobile (tel qu'un téléphone portable) permet à ce terminal (grâce aux informations contenues dans la carte d'identification) de se connecter au réseau et d'échanger des données avec d'autres dispositifs du réseau. Cette carte forme un élément sécurisé du téléphone permettant une authentification de l'utilisateur de cette carte grâce à une clef d'authentification mémorisée par exemple dans les moyens de mémorisation de la carte.

Le document US 5 773 812 décrit une carte à microcircuit comprenant un premier microcircuit relié à une connexion galvanique et un deuxième microcircuit connecté à ce premier microcircuit, le deuxième microcircuit formant des moyens de couplage sans fil du premier microcircuit à un dispositif de connexion.

Il est connu, notamment du document WO 2007/113729, d'incorporer dans le corps d'un terminal mobile, une antenne passive de communication à champ proche ainsi qu'un module de communication adapté, raccordé à cette antenne, désigné également par module NFC (acronyme anglais pour « Near Field Communication »), l'ensemble comprenant le module NFC et l'antenne permettant une communication par radiofréquences du terminal avec un dispositif de lecture de carte sans contact externe utilisant la technologie NFC.

Un protocole de communication à champ proche connu est par exemple le protocole défini par la norme ISO 14443.

Un utilisateur d'un tel terminal mobile peut accéder à divers services sans fil, tels que par exemple des services de paiement électroniques sécurisés, des services d'ouvertures de portes ou peut échanger des informations avec un dispositif de lecture de la carte sans contact adapté à la technologie NFC.

Pour utiliser ce type de services ou pour échanger des informations, l'utilisateur approche son terminal mobile d'un tel dispositif de lecture, telle que par exemple un terminal de paiement ou une borne d'accès, de manière à ce que la communication en champ proche puisse s'établir.

Afin d'assurer une communication de qualité, dans le document WO 2007/113729, il est prévu notamment de déployer l'antenne dans le corps du terminal mobile de manière à conférer à cette dernière une dimension la plus grande possible.

Lors de l'agencement de l'antenne dans le téléphone, il est encore nécessaire de tenir compte de l'environnement métallique immédiat de l'antenne, ce dernier pouvant créer des perturbations relativement importantes à l'origine d'une réduction de la portée de l'antenne.

Par conséquent, l'intégration d'une antenne dans un terminal mobile standard non initialement prévu pour fonctionner en communication à champ proche peut s'avérer complexe voire impossible à réaliser du fait notamment de ces contraintes spatiales.

L'invention a notamment pour but de résoudre cet inconvénient.

A cet effet, l'invention a pour objet une carte à microcircuit, telle qu'une carte d'identification à un réseau de téléphonie mobile, comprenant un premier microcircuit formant un microcontrôleur de traitement de données configuré pour échanger un signal de données avec un dispositif de lecture de la carte sans contact par l'intermédiaire d'une antenne de communication à champ proche, **caractérisé en ce qu**'elle comprend un deuxième microcircuit comprenant des moyens d'amplification de la puissance du signal de données susceptible d'être échangé entre le microcontrôleur de traitement et le dispositif de lecture.

L'homme du métier est détourné de la solution proposée ci-dessus par l'état de la technique qui incite clairement l'homme du métier à déporter l'antenne hors de la carte à microcircuit pour pouvoir en augmenter sa dimension et ainsi sa portée.

La solution proposée ci-dessus propose de résoudre le problème selon une approche très différente de celle utilisée dans l'état de la technique.

On entend par « microcontrôleur de traitement », un circuit intégré apte à exécuter une fonction de façon autonome et intégrant par exemple des moyens de traitement de données formés par un microprocesseur et des moyens de mémorisation de données.

Conformément à l'invention, ce microcontrôleur de traitement est également configuré pour établir une communication en champ proche avec le dispositif de lecture sans contact de la carte.

Par exemple, dans le cas d'une carte d'identification à un réseau de téléphonie mobile, le microcontrôleur de traitement est également configuré pour la transmission de données sécurisées avec une unité du téléphone mobile pour l'identification à un réseau de téléphonie mobile. Un tel microcontrôleur est désigné communément par « puce SIM ».

Grâce aux moyens d'amplification, la portée de l'antenne est augmentée sans nécessiter une augmentation de la dimension de cette dernière. Au contraire, il est possible de réduire la dimension de l'antenne tout en assurant une qualité de communication équivalente à celle fournie par une antenne de dimension plus grande mais dont les signaux ne sont pas amplifiés.

Par ailleurs, comme les moyens d'amplification sont avantageusement incorporés directement dans la carte à microcircuit sous forme d'un microcircuit, l'adaptation d'un terminal mobile quelconque à la technologie de communication sans contact est facilitée. En effet, comme l'antenne peut avoir une dimension réduite, il est possible de s'affranchir des contraintes spatiales existantes à l'intérieur du terminal mobile.

Des moyens d'amplification adaptés comprennent par exemple le microcontrôleur « PN 512 » développé par la société NXP Semiconductors.

En prévoyant dans la carte à microcircuit des moyens d'amplification du signal de données, il est possible d'améliorer les performances de l'antenne. Il est ainsi possible de réduire sa dimension tout en conservant une communication de qualité et donc de faciliter son incorporation dans un terminal mobile et de préférence dans des éléments de petites dimensions tels que notamment une carte d'identification d'abonné.

Par conséquent, grâce aux moyens d'amplification, l'incorporation d'une antenne dans un téléphone standard non initialement prévu pour établir des communications en champ proche se trouve facilitée.

Par exemple, la carte à microcircuit est de type à technologie MIFARE™.

De préférence, la carte comprend un support de circuit délimitant une face inférieure, cette face inférieure portant au moins un des microcircuits, et une face supérieure, opposée à la face inférieure, portant une plage métallique de contacts avec au moins un dispositif externe à la carte.

Dans un mode préféré de l'invention, les deux microcircuits sont portés par la face inférieure du support.

De préférence, la carte incorpore l'antenne et l'antenne est portée par le support, de préférence par la face inférieure du support portant le microcontrôleur de traitement. Par exemple, l'antenne est formée d'un enroulement d'une pluralité de spires électriquement conductrices agencées de manière à s'étendre en périphérie du support.

De préférence, les premier et deuxième microcircuits sont raccordés à un contact de la plage métallique destiné à être raccordé à un circuit d'alimentation électrique externe au module, par exemple le contact C5 défini par la norme ISO 7816-2.

En outre, de préférence, le contour externe de la plage métallique délimite une surface d'aire inférieure à celle de la face supérieure du support, par exemple inférieure à la moitié de l'aire de la face supérieure du support.

Grâce à cette configuration particulière du support et de la plage métallique, il est possible de regrouper sur une même face du support, le microcontrôleur de traitement ainsi que l'ensemble des éléments supplémentaires nécessaires à la mise en oeuvre de l'invention tels que les moyens d'amplification, des composants réalisant une adaptation d'impédance, un quartz formant horloge des moyens d'amplification et l'antenne.

Une carte selon l'invention peut en outre comprendre l'une ou plusieurs des caractéristiques selon lesquelles :
- le microcontrôleur est configuré pour échanger un signal de données avec le dispositif de lecture selon le protocole de communication en champ proche tel que défini par la norme ISO 14 443 ;
- le dispositif de lecture étant configuré pour communiquer selon un premier protocole de communication et le microcontrôleur de traitement étant configuré pour communiquer selon un deuxième protocole de communication, la carte comprend en outre une interface de conversion du signal de données d'un protocole vers l'autre protocole ;
- la carte comprend un corps de carte délimitant les dimensions extérieures de la carte et comprenant une cavité de réception du support et d'au moins un des microcircuits, la face inférieure du support étant dirigée vers le fond de la cavité ;
- le corps de carte a une forme générale de plaque et comprend une zone centrale délimitant la cavité et une zone périphérique entourant la cavité et ayant une largeur minimale prédéfinie de manière à former un cadre de rigidification de la carte ;
- le support du circuit et le corps de la carte ont des dimensions sensiblement homothétiques dans un plan horizontal de la carte avec un rapport sensiblement unitaire ;
- la carte est une carte d'identification à un réseau de téléphonie mobile du type SIM, USIM, RUIM ;
- la carte a une plus grande dimension inférieure à 50 mm ;
- le microcontrôleur du premier microcircuit est configuré pour la transmission de données sécurisées avec une unité d'un terminal mobile pour l'identification à un réseau de téléphonie mobile.

Enfin, l'invention a pour objet un terminal mobile comprenant une carte d'identification à un réseau de téléphonie mobile et une batterie d'alimentation électrique de cette carte, **caractérisé en ce que** la carte d'identification est une carte à microcircuit selon l'invention, le microcontrôleur de traitement et les moyens d'amplification étant alimentés par la batterie.

L'invention sera mieux comprise à la lecture de la description qui va suivre, donnée uniquement à titre d'exemple et faite en se référant aux dessins dans lesquels :
- la figure 1 représente un terminal mobile comprenant une carte à microcircuit selon un premier mode de réalisation de l'invention ;
- la figure 2 représente un schéma de l'architecture fonctionnelle de la carte de la figure 1,
- la figure 3 représente une vue de dessus à échelle agrandie de la carte de la figure 1 ;
- la figure 4 représente une vue en coupe selon la ligne 4-4 de la carte de la figure 3 ;
- la figure 5 représente une vue de dessous d'une partie correspondant à un support du circuit de la carte de la figure 3.

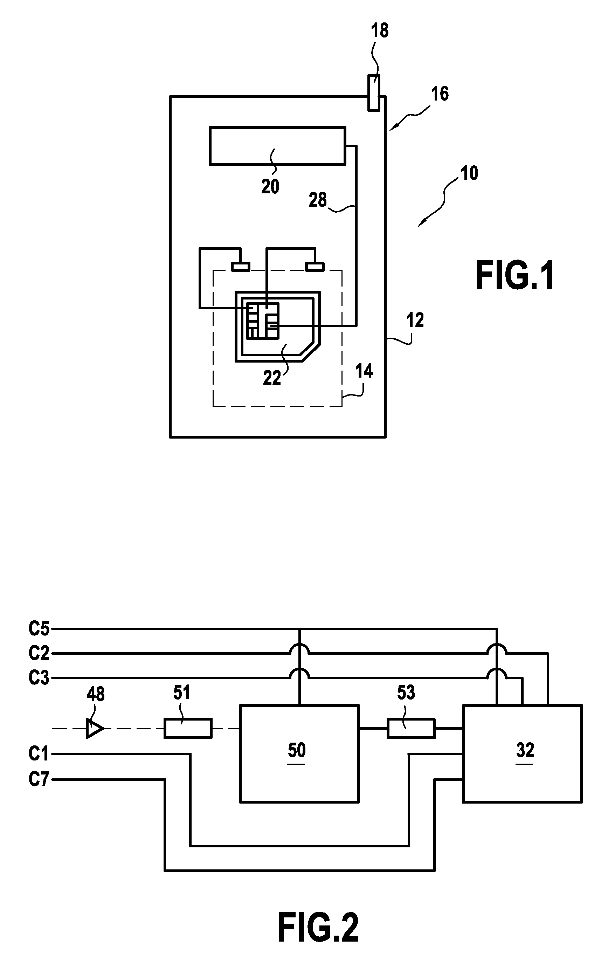

On a représenté sur **la** **figure 1** un terminal mobile désigné par la référence générale 10 dans lequel l'invention peut être mise en oeuvre. Dans la suite de la description, on décrira l'application particulière de la présente invention à un téléphone mobile classique. Bien entendu, la présente invention s'applique à tout type de terminal mobile tel que notamment un assistant numérique communiquant (en anglais « connected PDA »), un téléphone mobile multifonction (en anglais « Smart Phone »), etc.

Ce téléphone mobile 10 comprend de façon classique un boîtier 12, incorporant notamment une batterie 14 ainsi que des moyens 16 d'envoi/réception de données entre le téléphone 10 et un réseau de téléphonie mobile de type par exemple GSM/GPRS, ces moyens 16 comprenant par exemple une antenne 18 et un processeur de bande de base 20 pour l'échange des données sécurisées et pour l'émission et la réception de paquets de données.

Par souci de simplification, les autres éléments matériels et logiciels classiquement présents dans le téléphone mobile, tels que notamment un écran, un clavier, etc. n'ont pas été représentés sur **la** **figure 1****.**

En outre, comme cela est illustré de façon schématique sur cette figure, le téléphone 10 comprend encore une carte 22 d'identification au réseau de téléphonie mobile. Cette carte d'identification 22, dite également de façon générale carte SIM (acronyme anglais pour « *Subscriber Identity Card Module* ») ou carte USIM (pour « *Universal Subscriber Identity Module* » encore appelée carte UICC pour « *UMTS Integrated Circuit Card* ») ou plus généralement carte RUIM (pour "*Removable Universal Identity Module*"), est de façon générale une carte à microcircuit ou carte à puce.

On désignera par la suite, par puce de la carte, l'ensemble du circuit électronique de cette carte.

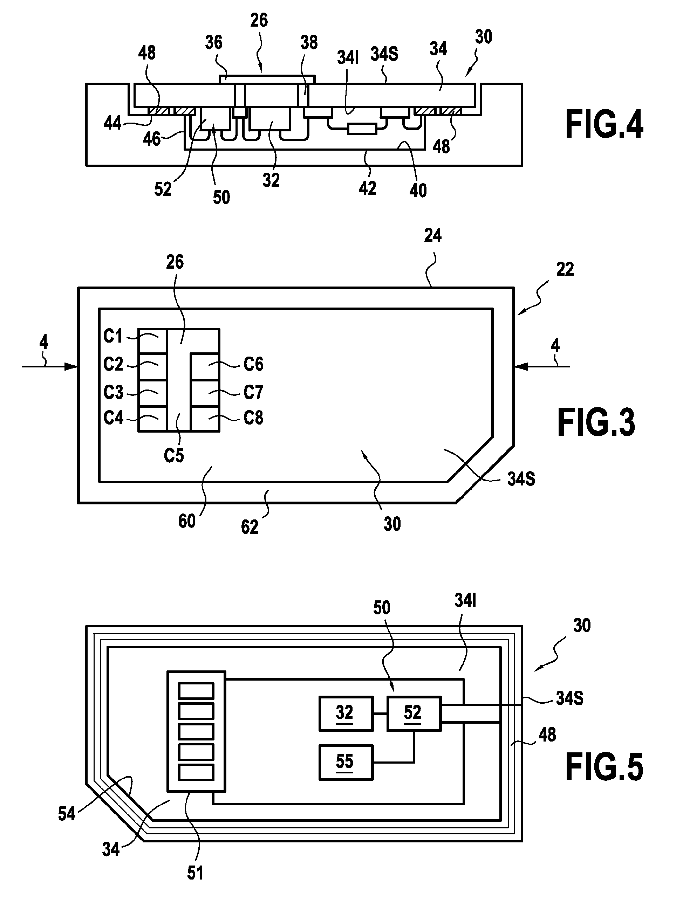

De façon connue en soi, cette carte 22 comprend un corps de carte 24 délimitant les dimensions extérieures de la carte 22, ces dimensions extérieures étant de préférence égales aux dimensions du format ID-000 défini par la norme ISO 7816 **(****figure 3****),** c'est-à-dire de dimensions 25 mm x 15 mm. En variante, il peut s'agir également d'une carte au format mini UICC (pour « Universal Integrated Circuit Card »). Il peut s'agir également d'une carte mémoire, par exemple du type MMC (pour « Multi Media Card ») ou RS-MMC (pour « Reduced Size Multi Media Card »).

Dans ce premier mode de réalisation, la carte 22 comprend une interface 26 de contacts avec un dispositif externe, par exemple avec les moyens 16 d'envoi et de réception de données dans le réseau de téléphonie mobile.

Cette interface de contacts 26 comprend huit contacts C1 à C8 parmi lesquels cinq sont attribués par la norme ISO 7816-2. Cette norme définit classiquement la fonction, la position et le nombre des contacts électriques de surface de la carte 22 avec un dispositif externe à la carte.

Ainsi, conformément à cette norme, le contact C7, désigné classiquement par I/O, est relié par exemple par un canal de communication 28 avec un dispositif externe, tel que par exemple le processeur de bande de base 20, et la puce de la carte 22 pour l'échange de données entre la puce de la carte 22 et le processeur de bande de base 20. Le contact C1, désigné classiquement par VCC, forme une borne d'alimentation de la carte 22 et est dans cet exemple relié à une borne correspondante de la batterie 14 du téléphone 10. Le contact C5, désigné classiquement par GND, est défini comme étant un potentiel de référence commun à la puce de la carte 22 et à un dispositif externe à la carte 22.

En outre, la carte 22 comprend un module électronique 30 à microcircuit. Ce module 30 comporte un premier microcircuit 32 formant un microcontrôleur de traitement de données.

De préférence, dans ce premier mode de réalisation, le microcontrôleur du premier microcircuit 32 est configuré pour la transmission de données sécurisées avec une unité d'un terminal mobile pour l'identification à un réseau de téléphonie mobile. Ce microcontrôleur est également désigné communément par « puce SIM » de la carte d'identification d'abonné.

Par ailleurs, le microcontrôleur 32 comprend par exemple une mémoire vive (RAM pour « *Random Access Memory* »), une mémoire statique (ROM pour « *Read Only Memory* »), un microprocesseur et une mémoire non volatile pour le stockage des données spécifiques à un utilisateur du téléphone 10. Ces éléments sont classiquement présents dans une carte d'identification 22 et permettent de gérer des communications téléphoniques sécurisées sur un réseau de téléphonie mobile. Toutefois, on notera que cette énumération des composants du microcontrôleur 32 n'est pas limitative et peut comprendre en outre tout composant approprié pour la gestion des communications sur un réseau de téléphonie mobile.

Le microcontrôleur de traitement 32 est raccordé à certains des contacts de l'interface 36, tels que les contacts C2 désigné par RST (Reset) pour la réinitialisation du microcontrôleur, C3 désigné par CLK pour la transmission d'un signal d'horloge, C1, C5 et C7 qui ont déjà été décrits ci-dessus.

Le module électronique 30 comprend également un support 34 portant la puce de la carte 22 et notamment le microcontrôleur de traitement 32. Plus précisément, le support 34 délimite une première face, dite face inférieure 34I sur laquelle s'étend le microcontrôleur 32 ainsi qu'une deuxième face, dite face supérieure 34S opposée à la première face et portant l'interface de contacts 26. Le support 34 est généralement réalisé dans un matériau électriquement isolant tel que par exemple de l'époxy.

Dans cet exemple et de façon connue en soi, l'interface de contacts 26 est formée par une plage métallique 36 et le premier microcircuit 32 s'étend au droit de cette plage 36 de manière à ce que le raccordement électrique de ce microcircuit 32 avec les différents contacts de la plage 36 soit facilité. De façon classique, les circuits s'étendant sur la face inférieure 34I sont reliés par des fils conducteurs à la plage métallique 36 traversant des perçages 38 prévus à cet effet dans le support 34 (« via » selon l'appellation anglo-saxonne).

Dans une variante non illustrée, la puce peut être assemblée sur le support par des procédés de report de puce de type « monté-retourné» (de l'anglais « flip-chip »), c'est-à-dire que tous les contacts de la puce, sous forme de billes ou de bosses métalliques, sont situés sur une seule face. La puce est montée retournée lors du montage de manière à ce que les billes ou les bosses soient soudées aux conducteurs appropriés sur le support 34.

Afin de loger le module 30, comme cela est illustré par **la** **figure 4****,** le corps de carte 24 est de préférence muni d'une cavité 40 de réception du module 30 agencée de manière à ce que la face inférieure 34I portant le microcircuit 32 soit dirigée vers le fond 42 de cette cavité 40. Par exemple, la cavité 40 comprend un fond 42 d'épaisseur constante correspondant à une partie amincie du corps de la carte 22 et une bordure 44 périphérique surélevée par rapport au fond 42 entoure ce dernier en délimitant un gradin 46. Cette bordure périphérique 44 a une surface sensiblement plane servant d'appui au support 34. Le module 30 est fixé dans la cavité 40 du corps de carte 24 par collage des bords de la face inférieure 34I du support 34 sur la bordure périphérique ou par tout autre procédé adapté.

En outre, dans cet exemple, le terminal mobile 10 est configuré pour échanger des données avec un dispositif de lecture de la carte 22 externe au terminal 10, tel qu'une borne de lecture-écriture (non représentée), par couplage en champ proche et comprend à cet effet une antenne 48 de communication en champ proche (représentée sur les **figures 2****,** **4 et 5**). De préférence, l'antenne 48 est configurée pour communiquer avec un dispositif de lecture selon le protocole de communication en champ proche défini par la norme ISO 14 443. Ainsi, par exemple, l'antenne est adaptée pour communiquer dans des bandes de fréquences prédéfinies, telles que les bandes de fréquences porteuses définies par la norme. Ainsi, dans cet exemple, l'ensemble comprenant l'antenne 48 et les composants 52 a une fréquence d'accord égale sensiblement à 13.56 Mégahertz.

A cet effet, le microcontrôleur de traitement 32 est configuré pour échanger un signal de données avec le dispositif de lecture via cette antenne de communication à champ proche 48.

Dans cet exemple, le dispositif de lecture est configuré pour communiquer selon un premier protocole de communication tel que le protocole de communication en champ proche défini par la norme ISO 14 443. Par ailleurs, le microcontrôleur 32 est configuré pour communiquer selon un deuxième protocole de communication tel que le protocole SPI (acronyme pour « Serial Peripheral Interface), 12C (acronyme anglais pour « Inter Integrated Circuit) ou encore SWP (acronyme anglais pour Single Wired Protocol »).

Ainsi, afin de permettre au microcontrôleur 32 d'échanger des données avec le dispositif de lecture de carte sans contact, la carte 22 comprend encore une interface de conversion (non représentée) du signal de données d'un protocole vers l'autre protocole.

Plus particulièrement, afin d'améliorer la qualité de la communication en champ proche avec le dispositif de lecture de carte, la carte 22 comporte un deuxième microcircuit 50 comprenant notamment des moyens 52 d'amplification de la puissance du signal de données susceptible d'être échangé entre le microcontrôleur de traitement 32 et l'antenne 48.

Ce deuxième microcircuit 50 est porté de préférence par la face inférieure 34I du support 34. Des moyens d'amplification 52 appropriés comprennent par exemple le microcontrôleur PN 512 commercialisé par la société NXP Semiconductors.

Dans cet exemple, le deuxième microcircuit 50 comprend également des moyens 51 d'adaptation d'impédance des moyens d'amplification 52 à l'antenne de communication en champ proche 48. Ces moyens d'adaptation 51 comprennent par exemple des éléments passifs et actifs tels que notamment des résistances et des capacités pouvant être incorporées dans l'antenne 48.

Par ailleurs, le microcontrôleur d'amplification 52 est par exemple raccordé au microcontrôleur de traitement 32 par un bus série de données classique 53. En outre, le deuxième microcircuit 52 comprend un quartz formant horloge 55 pour cadencer les signaux émis/reçus par les moyens d'amplification. Par ailleurs, le deuxième microcircuit 50 peut comprendre également l'interface de conversion précédemment décrite.

L'agencement de ces différents microcircuits est illustré schématiquement par **la** **figure 2** qui représente une architecture fonctionnelle de la puce de la carte 22.

Ainsi, de préférence, les premier 32 et deuxième 50 microcircuits sont raccordés à un contact de la plage métallique 36 destiné à être raccordé à un circuit d'alimentation électrique externe à la carte, par exemple le contact C5 de la norme ISO 7816-2. Dans cet exemple, le circuit d'alimentation externe est formé par la batterie 14 du terminal mobile 10. On notera ainsi qu'en cas d'extinction du téléphone mobile, la carte d'identification 22 n'est plus alimentée et que par conséquent, les moyens d'amplification 52 non plus. Par ailleurs, l'antenne 48 est raccordée aux moyens d'amplification 52 et ces moyens d'amplification 52 sont raccordés au microcontrôleur 32.

Grâce à ces moyens d'amplification 52, la portée de l'antenne 48 est augmentée. Il est ainsi possible de réduire la dimension de l'antenne 48 de manière à ce qu'elle puisse être incorporée dans le la carte 24, et de préférence, conformément au premier mode de réalisation de l'invention illustré sur **la** **figure 5****,** dans le support 34 du module électronique 30.

On a ainsi représenté sur **cette** **figure 5****,** le support 34 de module portant l'antenne de communication 48 en champ proche, l'antenne 48 s'étendant selon ce premier mode de réalisation de l'invention sur la face inférieure 34I du support 34. Dans cet exemple, l'antenne 48 est formée d'un enroulement d'une pluralité de spires 54 électriquement conductrices agencées de manière à s'étendre en périphérie du support 34. Ces spires 54 forment des boucles de forme générale rectangulaire suivant la forme générale du contour du support 34 et de circonférences croissantes dans le sens allant de l'intérieur vers l'extérieur du support 34, comme cela est illustré par **la** **figure 5****.** Par ailleurs, de préférence, l'antenne 48 représentée sur cette figure est réalisée sous forme de pistes conductrices gravées sur la face inférieure du support 34.

Comme cela est représenté plus particulièrement sur **les** **figures 4 et 5****,** afin de regrouper sur une même face du support 34, de préférence la face inférieure 34I du support 34, l'antenne de communication en champ proche 48, les deux microcircuits 32 et 50, la face supérieure 34S (ou inférieure 34I) du support 34 a une aire supérieure à celle de la surface de la plage métallique 36 délimitée par le contour externe de cette plage 36. Par exemple, la surface de la plage métallique 36, de format sensiblement normalisé, a une aire inférieure à la moitié de celle de la face supérieure (ou inférieure) du support.

De préférence, le support 34 de circuit et le corps de la carte 24 ont des dimensions sensiblement homothétiques dans un plan horizontal de la carte avec un rapport sensiblement égal à 1.

Dans le premier mode de réalisation de l'invention illustré sur la figure 3, la cavité 40 s'étend dans une zone centrale 60 du corps de la carte 24 entourée d'une zone périphérique 62 de largeur sensiblement constante. La largeur de cette zone périphérique est prédéfinie de manière à conférer une rigidité suffisante à l'ensemble de la carte 22 et forme ainsi un cadre de rigidification 62 de la carte 22.

Ce cadre 62 permet également de protéger le module 30 d'une désolidarisation intempestive de ce dernier avec le corps de la carte 24 par recouvrement des zones de prises latérales du support du module. L'homme du métier n'aura aucune difficulté, grâce à ses connaissances générales, à choisir la valeur de la largeur de zone périphérique adaptée 62 pour atteindre l'effet de rigidification recherché. En particulier, une largeur de la zone périphérique 62 adaptée est par exemple supérieure ou égale à environ un millimètre et de préférence égale à deux millimètres dans le cas d'une carte au format ID-000.

Dans un deuxième mode de réalisation non illustré sur les figures, la carte comporte trois microcircuits. Un premier microcircuit forme un premier microcontrôleur de traitement de données configuré spécifiquement pour l'échange de données relatives à la communication en champ proche et est raccordé à un deuxième microcircuit comprenant les moyens d'amplification selon l'invention.

Dans ce cas, ces premier et deuxième microcircuits forment un ensemble indépendant d'un troisième microcircuit formant un deuxième microcontrôleur de traitement configuré pour la transmission de données sécurisées avec une unité d'un terminal mobile pour l'identification à un réseau de téléphonie mobile. Ce deuxième microcontrôleur de traitement est désigné communément par « puce SIM » de la carte d'identification au réseau de téléphonie mobile.

Dans un troisième mode de réalisation également non illustré sur les figures, les microcircuits 32 et 50 s'étendent au moins partiellement à l'intérieur du corps de carte 24 hors du module électronique 30.

Bien entendu, la présente invention est susceptible de diverses variantes et modifications qui apparaîtront à l'homme de l'art. En particulier, la réalisation pratique de l'invention à partir des indications fonctionnelles données ci-dessus est à la portée de l'homme du métier. L'invention n'est pas limitée aux modes de réalisation décrits ci-dessus. Ainsi, l'antenne de communication en champ proche peut être également incorporée dans le corps de la carte à l'extérieur du support ou être portée sur une face supérieure de ce support ou encore s'étendre sur les deux faces du support ou éventuellement hors de la carte.

## Revendications

1. Carte à microcircuit (22), telle qu'une carte d'identification à un réseau de téléphonie mobile, comprenant un premier microcircuit (32) formant un microcontrôleur de traitement de données, la carte étant configurée pour échanger un signal de données avec un dispositif de lecture sans contact par un protocole de communication en champ proche, comprenant de plus un deuxième microcircuit (50) comprenant des moyens (52) d'amplification de la puissance du signal de données susceptible d'être échangé entre le microcontrôleur de traitement (32) et le dispositif de lecture, **caractérisé en ce que** la carte (22) comprend un support (34) de circuit délimitant une face inférieure (34I), cette face inférieure (34I) portant au moins un des microcircuits (32, 50), et une face supérieure (34S), opposée à la face inférieure (34I), portant une plage métallique (36) de contacts avec au moins un dispositif externe à la carte (22), la carte (22) incorporant une antenne, l'antenne (48) étant portée par le support (34).

2. Carte (22) selon la revendication 2, dans laquelle les deux microcircuits (32, 50) sont portés par la face inférieure (34I) du support (34).

3. Carte (22) selon la revendication 2, dans laquelle l'antenne (48) est formée d'un enroulement d'une pluralité de spires électriquement conductrices agencées de manière à s'étendre en périphérie du support (34).

4. Carte (22) selon l'une quelconque des revendications 1 à 3, dans laquelle les premier (32) et deuxième (50) microcircuits sont raccordés à un contact de la plage métallique (36) destiné à être raccordé à un circuit d'alimentation électrique externe à la carte (22), par exemple le contact C5 défini par la norme ISO 7816-2.

5. Carte (22) selon l'une quelconque des revendications 1 à 4, dans laquelle le contour externe de la plage métallique (36) délimite une surface d'aire inférieure à celle de la face supérieure (34S) du support (34), par exemple inférieure à la moitié de l'aire de la face du support.

6. Carte (22) selon l'une quelconque des revendications précédentes, dans laquelle le microcontrôleur de traitement est configuré pour échanger un signal de données avec le dispositif de lecture selon le protocole de communication en champ proche défini par la norme ISO 14 443.

7. Carte (22) selon l'une quelconque des revendications précédentes, dans laquelle, le dispositif de lecture étant configuré pour communiquer selon un premier protocole de communication et le microcontrôleur de traitement (32) étant configuré pour communiquer selon un deuxième protocole de communication, la carte (22) comprend en outre une interface de conversion du signal de données d'un protocole vers l'autre protocole.

8. Carte (22) selon l'une quelconque des revendications précédentes, comprenant un corps de carte (24) délimitant les dimensions extérieures de la carte (22) et comprenant une cavité (40) de réception du support (34) et d'au moins un des microcircuits (32, 50), la face inférieure (34I) du support (34) étant dirigée vers le fond de la cavité (40).

9. Carte (22) selon la revendication précédente, dans laquelle le corps de carte (24) a une forme générale de plaque et comprend une zone centrale (60) délimitant la cavité (40) et une zone périphérique (62) entourant la cavité (40) et ayant une largeur minimale prédéfinie de manière à former un cadre de rigidification de la carte (22).

10. Carte (22) selon la revendication 8 ou 9, dans laquelle, le support du circuit (34) et le corps de la carte (24) ont des dimensions sensiblement homothétiques dans un plan horizontal de la carte (22) avec un rapport sensiblement égal à 1.

11. Carte (22) selon l'une quelconque des revendications précédentes, étant une carte d'identification à un réseau de téléphonie mobile du type SIM, USIM, RUIM.

12. Carte (22) selon l'une quelconque des revendications précédentes, ayant une plus grande dimension inférieure à cinquante millimètres (mm).

13. Carte (22) selon l'une quelconque des revendications précédentes, dans laquelle le microcontrôleur de traitement du premier microcircuit (32) est configuré pour la transmission de données sécurisées avec une unité d'un terminal mobile pour l'identification à un réseau de téléphonie mobile.

14. Terminal mobile (10) comprenant une carte d'identification à un réseau de téléphonie mobile et une batterie (14) d'alimentation électrique de cette carte, **caractérisé en ce que** la carte d'identification est une carte à microcircuit (22) selon l'une quelconque des revendications précédentes, le microcontrôleur de traitement (32) et les moyens d'amplification (52) étant alimentés par la batterie (14).

## Patentansprüche

1. Mikrochipkarte (22), wie eine Karte zur Identifikation bei einem Mobiltelefonnetz, umfassend einen ersten Mikroschaltkreis (32), der einen Mikrocontroller zur Datenverarbeitung bildet, wobei die Karte dazu ausgelegt ist, ein Datensignal mit einer Vorrichtung zum berührungslosen Lesen durch ein Nahfeldkommunikationsprotokoll auszutauschen, zudem umfassend einen zweiten Mikroschaltkreis (50), der Mittel (52) zur Verstärkung der Leistung des Datensignals, das geeignet ist, zwischen dem Verarbeitungsmikrocontroller (32) und der Lesevorrichtung ausgetauscht zu werden, umfasst,
**dadurch gekennzeichnet, dass** die Karte (22) einen Schaltkreisträger (34) umfasst, der eine Unterseite (34I), wobei diese Unterseite (34I) wenigstens einen der Mikroschaltkreise (32, 50) trägt, sowie eine von der Unterseite (34I) abgewandte Oberseite (34S) begrenzt, die einen Metallbereich (36) von Kontakten mit wenigstens einer außerhalb der Karte (22) befindlichen Vorrichtung trägt, wobei die Karte (22) eine Antenne enthält, wobei die Antenne (48) von dem Träger (34) getragen ist.

2. Karte (22) nach Anspruch 1, wobei die beiden Mikroschaltkreise (32, 50) von der Unterseite (34I) des Trägers (34) getragen sind.

3. Karte (22) nach Anspruch 2, wobei die Antenne (48) von einer Wicklung aus einer Vielzahl von elektrisch leitenden Windungen, die derart angeordnet sind, dass sie am Umfang des Trägers (34) verlaufen, gebildet ist.

4. Karte (22) nach einem der Ansprüche 1 bis 3, wobei der erste (32) und der zweite (50) Mikroschaltkreis mit einem Kontakt des Metallbereichs (36), der dazu bestimmt ist, an einen außerhalb der Karte (22) befindlichen Stromversorgungskreis angeschlossen zu werden, zum Beispiel dem durch die Norm ISO 7816-2 definierten Kontakt C5 verbunden sind.

5. Karte (22) nach einem der Ansprüche 1 bis 4, wobei die Außenkontur des Metallbereichs (36) eine Fläche mit einem Flächeninhalt, der kleiner als der der Oberseite (34S) des Trägers (34), beispielsweise kleiner als die Hälfte des Flächeninhalts der Fläche des Trägers ist, begrenzt.

6. Karte (22) nach einem der vorhergehenden Ansprüche, wobei der Verarbeitungsmikrocontroller dazu ausgelegt ist, ein Datensignal mit der Lesevorrichtung gemäß dem durch die Norm ISO 14 443 definierten Nahfeldkommunikationsprotokoll auszutauschen.

7. Karte (22) nach einem der vorhergehenden Ansprüche, wobei, wenn die Lesevorrichtung dazu ausgelegt ist, gemäß einem ersten Kommunikationsprotokoll zu kommunizieren und der Verarbeitungsmikrocontroller (32) dazu ausgelegt ist, gemäß einem zweiten Kommunikationsprotokoll zu kommunizieren, die Karte (22) ferner eine Schnittstelle zur Umwandlung des Datensignals von einem Protokoll zum anderen Protokoll umfasst.

8. Karte (22) nach einem der vorhergehenden Ansprüche, umfassend einen Kartenkörper (24), der die Außenabmessungen der Karte (22) begrenzt und eine Vertiefung (40) zur Aufnahme des Trägers (34) und von wenigstens einem der Mikroschaltkreise (32, 50) umfasst, wobei die Unterseite (34I) des Trägers (34) in Richtung des Bodens der Vertiefung (40) gerichtet ist.

9. Karte (22) nach dem vorhergehenden Anspruch, wobei der Kartenkörper (24) allgemein plattenförmig ist und einen mittleren Bereich (60), welcher die Vertiefung (40) begrenzt, sowie einen Umfangsbereich (62) umfasst, der die Vertiefung (40) umgibt und eine derart vordefinierte Mindestbreite aufweist, dass er einen Rahmen zur Versteifung der Karte (22) bildet.

10. Karte (22) nach Anspruch 8 oder 9, wobei der Träger des Schaltkreises (34) und der Körper der Karte (24) im Wesentlichen homothetische Abmessungen in einer Horizontalebene der Karte (22) mit einem Verhältnis im Wesentlichen gleich 1 haben.

11. Karte (22) nach einem der vorhergehenden Ansprüche, die eine Karte zur Identifikation bei einem Mobiltelefonnetz vom Typ SIM, USIM, RUIM ist.

12. Karte (22) nach einem der vorhergehenden Ansprüche, die eine größere Abmessung kleiner als fünfzig Millimeter (mm) hat.

13. Karte (22) nach einem der vorhergehenden Ansprüche, wobei der Verarbeitungsmikrocontroller des ersten Mikroschaltkreises (32) für die Übertragung von gesicherten Daten mit einer Einheit eines mobilen Endgerätes für die Identifikation bei einem Mobiltelefonnetz ausgelegt ist.

14. Mobiles Endgerät (10), umfassend eine Karte zur Identifikation bei einem Mobiltelefonnetz und eine Batterie (14) zur Stromversorgung dieser Karte, **dadurch gekennzeichnet, dass** die Identifikationskarte eine Mikrochipkarte (22) nach einem der vorhergehenden Ansprüche ist, wobei der Verarbeitungsmikrocontroller (32) und die Verstärkungsmittel (52) über die Batterie (14) versorgt werden.

## Claims

1. A microcircuit card (22) such as a card for identification with a mobile telephony network, the card including a first microcircuit (32) forming a data-processor microcontroller, the card being configured to exchange a data signal with a contactless reader device by means of a near-field communication protocol, the card further comprising a second microcircuit (50) having amplifier means (52) for amplifying the power of a data signal being likely to be exchanged between the data-processor microcontroller (32) and the reader device, **characterized in that** the card (22) comprises a circuit support (34) defining both a bottom face (341), said bottom face (341) carrying at least one of the microcircuits (32, 50), and a top face (34S), opposite from the bottom face (341), carrying a metal area (36) of contacts for making contact with at least one device external to the card (22), the card (22) incorporating an antenna, the antenna (48) being carried by the support (34).

2. A card (22) according to claim 1, wherein both microcircuits (32, 50) are carried by the bottom face (341) of the support (34).

3. A card (22) according to claim 2, wherein the antenna (48) is formed by a winding of a plurality of electrically-conductive turns arranged in such a manner as to extend at the periphery of the support (34).

4. A card (22) according to any one of claims 1 to 3, wherein the first and second microcircuits (32, 50) are connected to a contact of the metal area (36) that is for connection to an electrical power supply circuit external to the card (22), e.g. the contact C5 as defined by the ISO 7816-2 standard.

5. A card (22) according to any one of claims 1 to 4, wherein the outline of the metal area (36) defines a surface area that is less than the surface area of the top face (34S) of the support (34), e.g. less than half the surface area of the face of the support.

6. A card (22) according to any preceding claim, wherein the data-processor microcontroller is configured to exchange a data signal with the reader device by using the near-field communication protocol defined by the ISO 14443 standard.

7. A card (22) according to any preceding claim, wherein the reader device is configured for communicating by using a first communication protocol and the data-processor microcontroller (32) is configured for communicating by using a second communication protocol, the card (22) further including a conversion interface for converting data signals from one protocol to the other protocol.

8. A card (22) according to any preceding claim, including a card body (24) defining the outside dimensions of the card (22) and including a cavity (40) for receiving the support (34) and at least one of the microcircuits (32, 50), the bottom face (341) of the support (34) facing towards the bottom of the cavity (40).

9. A card (22) according to the preceding claim, wherein the card body (24) is generally in the form of a plate and has a central zone (60) defining the cavity (40) and a peripheral zone (62) surrounding the cavity (40) and having a minimum width that is predefined in such a manner as to form a frame for stiffening the card (22).

10. A card (22) according to claim 8 or claim 9, wherein the circuit support (34) and the card body (24) have dimensions that are substantially homothetic in a horizontal plane of the card (22) with a scaling ratio that is substantially equal to 1.

11. A card (22) according to any preceding claim that is a card for identification with a mobile telephony network, the card being of the SIM, USIM, RUIM type.

12. A card (22) according to any preceding claim, having a greatest dimension that is less than fifty millimeters (mm).

13. A card (22) according to any preceding claim, wherein the data-processor microcontroller of the first microcircuit (32) is configured to perform secure data transmission with a unit of a mobile terminal for identification with a mobile telephony network.

14. A mobile terminal (10) including a card for identification with a mobile telephony network and a battery (14) for electrically powering the card, the card being **characterized in that** the identification card is a microcircuit card (22) according to any preceding claim, the data-processor microcontroller (32) and the amplifier means (52) being powered by the battery (14).
